(19) Europäisches Patentamt
European Patent Office
Office européen des brevets

(11) **EP 1 128 196 B1**

(12) **FASCICULE DE BREVET EUROPEEN**

(45) Date de publication et mention
de la délivrance du brevet:
**04.04.2007 Bulletin 2007/14**

(51) Int Cl.:
*G02B 6/02* *(2006.01)*     *G02B 6/036* *(2006.01)*

(21) Numéro de dépôt: **01400362.8**

(22) Date de dépôt: **12.02.2001**

(54) **Fibre optique monomode en cable pour reseaux de transmission à fibre optique à multiplexage en longueurs d'onde**

Monomodales optisches Faserkabel für ein faseroptisches WDM-Übertragungsnetz

Monomode optical fiber cable for WDM optical fiber transmission net

(84) Etats contractants désignés:
**AT BE CH CY DE DK ES FI FR GB GR IE IT LI LU MC NL PT SE TR**

(30) Priorité: **24.02.2000 FR 0002316**

(43) Date de publication de la demande:
**29.08.2001 Bulletin 2001/35**

(73) Titulaire: **Draka Comteq B.V.**
**1018 TX Amsterdam (NL)**

(72) Inventeurs:
- **De Montmorillon, Louis-Anne**
  **75017 Paris (FR)**
- **Nouchi, Pascale**
  **78600 Maisons Laffitte (FR)**
- **Fleury, Ludovic**
  **78390 Bois d'Arcy (FR)**
- **Sillard, Pierre**
  **78150 Le Chesnay (FR)**

(74) Mandataire: **Blokland, Arie**
**Algemeen Octrooi- en Merkenbureau,**
**P.O. Box 645**
**5600 AP Eindhoven (NL)**

(56) Documents cités:
**EP-A- 0 368 014**      **EP-A- 0 959 374**
**WO-A-97/33188**

- **YANMING LIU ET AL: "Design and fabrication of locally dispersion-flattened large effective area fibers" PROCEEDINGS OF THE EUROPEAN CONFERENCE ON OPTICAL COMMUNICATION, 20 septembre 1998 (1998-09-20), XP002105704**

**Description**

La présente invention concerne le domaine des transmissions par fibre optique, et plus particulièrement le domaine des transmissions en multiplexage de longueurs d'onde à fibre de ligne à dispersion décalée.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en « échelon », en « trapèze » ou en « triangle » pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Pour utiliser une fibre dans un réseau de transmission, et notamment dans un réseau de transmission à multiplexage en longueurs d'onde, il est intéressant que la fibre dispose d'une grande surface effective dans la plage de longueurs d'onde du multiplex. Une grande surface effective permet de limiter la densité de puissance dans la fibre, à puissance totale constante, et de limiter ou éviter les effets non-linéaires indésirables.

Pour les réseaux à haut débit, il est aussi utile que la fibre assure une propagation monomode des canaux du multiplex. ITU-T G 650 donne une définition de la longueur d'onde de coupure en câble. La longueur d'onde de coupure théorique de la fibre est généralement supérieure de plusieurs centaines de nanomètres à la longueur d'onde de coupure en câble. Il apparaît en fait que la propagation dans une fibre optique peut être monomode, même si la longueur d'onde de coupure théorique est supérieure à la longueur d'onde des signaux utilisés : de fait, au-delà d'une distance de quelques mètres ou dizaines de mètres, qui est faible devant les distances de propagation dans les réseaux de transmission à fibre optique, les modes secondaires disparaissent du fait d'un affaiblissement trop important. La propagation dans le système de transmission est alors monomode.

Il est aussi important que la fibre présente une sensibilité aussi faible que possible aux courbures et aux microcourbures. On évalue la sensibilité aux courbures comme expliqué dans la recommandation ITU-T G 650, en mesurant l'atténuation provoquée par l'enroulement de 100 tours d'une fibre autour une bobine de rayon 30 mm. La sensibilité aux microcourbures est mesurée de façon connue en soi ; on peut comme dans la suite la mesurer par rapport à une fibre telle que la fibre commercialisée par la demanderesse sous la référence ASMF 200.

Dans les nouveaux réseaux de transmission à hauts débits et multiplexés en longueurs d'onde, il est avantageux de limiter la pente de dispersion chromatique dans la plage de longueurs d'onde du multiplex ; l'objectif est de minimiser au cours de la transmission les distorsions entre les canaux du multiplex.

La fibre de ligne standard du réseau, appelée généralement fibre SMF, présente une longueur d'onde de dispersion nulle autour de 1300 nm, une dispersion chromatique $C_{SMF}$ à 1550 nm de l'ordre de 16 à 18 ps/nm/km, et une pente de dispersion chromatique $C'_{SMF}$ à 1550 nm de l'ordre de 0,055 à 0,062 ps/nm$^2$/km.

L'article de YANMING LIU ET AL: "Design and fabrication of locally dispersion-flattened large effective area fibers" PROCEEDINGS OF THE EUROPEAN CONFERENCE ON OPTICAL COMMUNICATION, 20 septembre 1998 (1998-09-20), XP002105704 concerne des fibres optiques monomodes, présentant des profils d'indice à couches multiples, pour une utilisation dans un système de transmission WDM. Ces fibres sont caractérisées par de faibles valeurs de dispersion chromatique, par des pentes de dispersion dite plate et par de fortes surfaces effectives (>72 $\mu$m$^2$). Plus précisément, les caractéristiques optiques des fibres fabriquées sont :

- une valeur de dispersion chromatique comprise entre -4 et -0,5 ps/nm-km ou entre +0,5 et 6 ps/nm-km pour une longueur d'onde de 1550 nm.
- une valeur de pente de dispersion chromatique comprise entre +0,014 et +0,04 ps/nm$^2$-km à cette même longueur d'onde.

Le réseau de transmission doit nécessairement être complété avec des tronçons de fibre de compensation de dispersion ou DCF (Dispersion Compensating Fiber en langue anglaise) destinés à compenser la dispersion chromatique et la pente de dispersion chromatique de la fibre de ligne SMF. On connaît, notamment par l'article de Y. Akasaka et al « Dispersion compensating technique of 1300 nm Zero-Dispersion SMF to get flat dispersion at 1550 nm range » Proc. 21 st Eur. Cont. on Opt. Comm. (ECOC'95 - Brussels), une fibre DCF ayant un taux de compensation compris entre 92 % et 108 %, pour une fibre SMF où $C_{SMF}$ = 16,3 ps/nm/km et $C'_{SMF}$ = 0,0617 ps/nm$^2$/km, ce qui correspond à un rapport $C_{DCF}/C'_{DCF}$ compris entre 235 nm et 287 nm.

Il existe également des fibres DCF vendues par la Société LUCENT sous la dénomination DK-modules (DK-40 ; DK-60 ; DK-80) ayant un taux de compensation compris entre 80 % et 120 %, pour une fibre SMF où $C_{SMF}$ = 17 ps/nm/km et $C'_{SMF}$ = 0,055 ps/nm$^2$/km, ce qui correspond à un rapport $C_{DCF}/C'_{DCF}$ compris entre 250 nm et 370 nm.

Le problème technique qui se pose est qu'un réseau de transmission comprenant une fibre de ligne SMF et une fibre DCF de type précédent nécessite une grande longueur de fibre DCF, ce qui induit une forte atténuation et un coût important.

L'invention a donc pour but de remplacer la fibre de ligne SMF par une fibre susceptible d'être parfaitement compensée au niveau de la dispersion C et de la pente de dispersion C' par une longueur réduite de fibre DCF de type précédent, et cela pour une large plage d'utilisation.

Si, a priori, une fibre à dispersion à peu près constante (c'est-à-dire à pente de dispersion nulle) sur toute la plage d'utilisation pourrait convenir, elle ne peut être mise en oeuvre en pratique, car la surface effective, décroissant avec la pente de dispersion, deviendrait trop faible pour éviter les effets non-linéaires indésirables, comme mentionné plus haut.

Les fibres DSF (acronyme de l'anglais : « Dispersion Shifted Fibers ») et NZDSF (acronyme de l'anglais : « Non Zero Dispersion Shifted Fibers ») connues jusqu'à présent ne permettent pas non plus de résoudre le compromis précédent.

La présente invention a pour objet une fibre optique monomode en câble selon la revendication 1.

La longueur d'onde de coupure théorique de la fibre est de préférence inférieure à 1.8 $\mu$m, la longueur d'onde de coupure de la fibre câblée devant être inférieure à 1.3 $\mu$m.

La fibre de l'invention peut être utilisée avantageusement au delà de la bande d'utilisation de la DCF de la même manière que la fibre SMF. Son utilisation est donc parfaitement envisageable dans la bande de transparence de la silice comprise entre 1300 et 1625 nm.

La fibre selon l'invention présente des propriétés très avantageuses au niveau des pertes par courbures. Ainsi, elle présente à 1550 nm des pertes par courbures inférieures ou égales à $10^{-2}$ dB pour 100 tours de fibre sur une bobine de rayon 30 mm. ; à 1625nm cette valeur est de 0.5 dB.

De même, elle présente à 1550 nm des pertes par courbures inférieures ou égales à 100 dB/m lorsqu'elle est enroulée autour d'un rayon 10 mm ; à 1625 nm cette valeur est de 400 dB/m.

En ce qui concerne la sensibilité aux microcourbures à 1550 nm (qui est évaluée ici par rapport à la sensibilité aux microcourbures d'une fibre standard commercialisée par la demanderesse sous la dénomination ASMF 200), la fibre selon l'invention présente une sensibilité aux microcourbures inférieure à 1, et de préférence inférieure à 0.8.

A 1550 nm, la fibre optique selon l'invention présente de préférence une pente de dispersion chromatique C' comprise entre 0.01 et 0.04 ps/nm$^2$.km, et une surface effective comprise entre 50 $\mu$m$^2$ et 70 $\mu$m$^2$.

Selon un mode de réalisation préférentiel, la fibre selon l'invention a un profil de type échelon-anneau avec les caractéristiques géométriques préférentielles suivantes :

- La différence $\Delta n_1$ entre l'indice de l'échelon de la fibre et l'indice de la gaine est comprise entre $5.9 \times 10^{-3}$ et $8.2 \times 10^{-3}$.
- La différence $\Delta n_3$ entre l'indice de l'anneau et l'indice de la gaine est comprise entre $0.9 \times 10^{-3}$ et $7.6 \times 10^{-3}$.
- La différence $\Delta n_2$ entre l'indice du segment intermédiaire entre l'échelon et l'anneau et l'indice de la gaine est comprise entre $- 6.8 \times 10^{-3}$ et $- 1.7 \times 10^{-3}$.
- Le rayon $r_1$ de l'échelon est compris entre 3 $\mu$m et 4.5 $\mu$m.
- Le rayon intérieur de l'anneau $r_2$ est compris entre 5.3 $\mu$m et 8.1 $\mu$m.
- Le rayon extérieur de l'anneau $r_3$ est compris entre 7.3 $\mu$m et 11.1 $\mu$m.

L'invention a également pour objet un réseau de transmission à fibre optique, à multiplexage en longueur d'onde comprenant comme fibre de ligne de la fibre selon l'invention pour une plage d'utilisation allant de 1300 nm à 1625 nm.

Un tel réseau de transmission comprend également de la fibre à compensation de dispersion, présentant une dispersion $C_{DCF}$ et une pente de dispersion $C'_{DCF}$ telles que le rapport [$C/_{CDCF}$: $C'/C'_{DCF}$] soit compris entre 0.8 et 1.2, et de préférence voisin de 1.

D'autres caractéristiques et avantages de la présente invention apparaîtront au cours de la description suivante d'un mode de réalisation donné à titre illustratif, mais nullement limitatif.

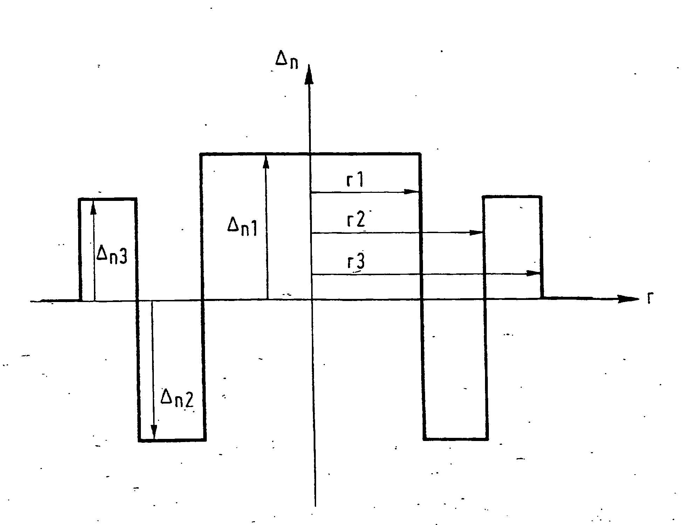

La figure unique montre très schématiquement le profil d'indice de type échelon-anneau d'une fibre selon l'invention.

En abscisse, on a mentionné le rayon r en microns et en ordonnées la différence d'indice $\Delta$n vis-à-vis de la gaine.

Le tableau 1 ci-après donne pour 12 fibres notées A à J les caractéristiques géométriques $r_i$ et $\Delta n_1$, pour i compris entre 1 et 3.

**TABLEAU 1**

| N° | r1 (µm) | r2 (µm) | r3 (µm) | Δn1 (10³) | Δn2 (10³) | Δn3 (10³) |
|----|---------|---------|---------|-----------|-----------|-----------|
| A* | 3.69 | 6.02 | 7.77 | 6.91 | -5.18 | 3.8 |
| B* | 3.56 | 5.74 | 10.94 | 7.1 | -6.39 | 1.06 |
| C* | 3.9 | 6.16 | 8.21 | 6.71 | -6.37 | 4.7 |
| D* | 3.68 | 6.31 | 10.52 | 6.99 | -4.55 | 2.1 |
| E* | 4.19 | 6.99 | 9.32 | 6.2 | -5.27 | 4.65 |
| F* | 4.24 | 6.6 | 9.43 | 6.32 | -5.37 | 3.79 |
| G* | 4.13 | 6.74 | 8.7 | 6.08 | -3.65 | 4.26 |
| H* | 3.94 | 6.41 | 9.86 | 6.5 | -4.87 | 1.95 |
| I | 3.67 | 6.48 | 8.64 | 7.24 | -5.79 | 5.79 |
| J* | 3.62 | 6.09 | 7.61 | 6.97 | -4.88 | 3.83 |
| * selon l'invention | | | | | | |

Le tableau 2 donne les caractéristiques de propagation à 1550 nm des fibres A à J, à savoir :

- La surface effective Seff ($µm^2$).
- La dispersion chromatique C (ps/nm/km).
- La sensibilité aux microcourbures $S_{µc}$ (sans unité).
- La pente de dispersion chromatique C' ($ps/nm^2/km$).
- Le rapport $Seff^2$/Pente C' ($µm^4.nm^2.km/ps$).
- Le rapport C/C' (nm).

En outre le tableau 2 mentionne :
- Les pertes par courbures PC à 1550 nm et à 1625 nm, exprimées en dB pour 100 tours de fibre sur une bobine de rayon 30 mm, ou exprimées en dB/m pour une fibre enroulée autour d'un rayon 10 mm.

**TABLEAU 2**

| N° | Seff ($\mu m^2$) @1.55$\mu$m | Dispersion C (ps/nm/km) @ 1.55$\mu$m | S$\mu$c @1.55$\mu$m | Pente C' (ps/nm$^2$/km) @ 1.55nm | $\lambda c$ ($\mu$m) | $\lambda o$ (nm) | PC10mm (dB/m) @ 1.55$\mu$m | PC30mm (dB) @ 1.55 $\mu$m | PC10mm (dB/m) @ 1.625$\mu$m | PC30mm (dB) @ 1.625$\mu$m | Seff$^2$/Pente C' ($\mu m^4$.nm.km/ps) @ 1,55$\mu$m | C/C' (nm) @ 1.55$\mu$m |
|---|---|---|---|---|---|---|---|---|---|---|---|---|
| A* | 52 | 8 | 0.7 | 0.031 | 1.40 | 1360 | 13 | $10^{-b}$ | 60 | $10^{-3}$ | $8.5\ 10^4$ | 260 |
| B* | 51 | 8 | 0.6 | 0.032 | 1.63 | 1360 | 8 | $<10^{-6}$ | 40 | $<10^{-3}$ | $7.9\ 10^{-3}$ | 250 |
| C* | 55 | 8 | 0.7 | 0.030 | 1.63 | 1350 | 11 | $<10^{-6}$ | 46 | $<10^{-3}$ | $1.0\ 10^5$ | 270 |
| D* | 51 | 8 | 0.6 | 0.023 | 1.80 | 1340 | 11 | $<10^{-5}$ | 53 | $<10^{-3}$ | $1.1\ 10^5$ | 350 |
| E* | 60 | 11 | 0.7 | 0.032 | 1.80 | 1320 | 17 | $<10^{-5}$ | 66 | $10^{-3}$ | $1.1 10^6$ | 340 |
| F* | 62 | 11 | 0.5 | 0.037 | 1.80 | 1330 | 7 | $<10^{-5}$ | 28 | $<10^{-3}$ | $1.01^5$ | 300 |
| G* | 65 | 11 | 0.7 | 0.044 | 1.63 | 1340 | 11 | $<10^{-5}$ | 40 | $<10^{-3}$ | $9.7 10^4$ | 250 |
| H* | 54 | 11 | 0.7 | 0.032 | 1.63 | 1320 | 14 | $10^{-6}$ | 62 | $10^{-3}$ | $9.2 10^{-4}$ | 340 |
| I | 51 | 5 | 0.6 | 0.017 | 1.80 | 1370 | 9 | $<10^{-5}$ | 44 | $<10^{-3}$ | $1.6 10^5$ | 290 |
| J* | 50 | 8 | 0.8 | 0.031 | 1.30 | 1360 | 12 | $2.10^{-5}$ | 53 | $2.10^{-3}$ | $8.1 10^4$ | 260 |

\* selon l'invention

- La longueur d'onde de coupure $\lambda_c$ ($\mu$m)
- La longueur d'onde de dispersion nulle $\lambda_0$ ($\mu$m).

Comme le montre le tableau 2, toutes les fibres selon l'invention répondent très largement aux critères de pertes par courbures et microcourbures.

En outre, compte tenu de la valeur du rapport C/C' compris entre 250 nm et 370 nm des fibres selon l'invention, elles sont particulièrement bien adaptées aux fibres DCF des réseaux de transmission.

A titre d'exemple:

Dans un système de transmission de l'état de la technique 100 km de fibre SMF sont compensés par 17 km de DCF avec les caractéristiques suivantes :

- $C_{SMF}$ = 16,3 ps/nm/km ; $C'_{SMF}$ = 0,0617 ps/nm$^2$/km
- $C_{DCF}/C'_{DCF}$ = 260 ; $C_{DCF}$ = - 100 ps/nm/km.

Dans un système selon l'invention où la fibre n° C des tableaux 1 et 2 remplace la fibre SMF avec :

C = 7,9 ps/nm/km ; C' = 0,03 ps/nm$^2$/km ; C/C' = 260 nm,

il suffira de 7,9 km de fibre DCF pour obtenir la même compensation au niveau de la dispersion et de la pente ; autrement dit la longueur de fibre DCF est 2,15 fois plus faible grâce à la mise en oeuvre d'une fibre de ligne selon l'invention.

Outre les propriétés qui viennent d'être décrites, la fibre selon l'invention présente une atténuation à 1550 nm inférieure ou égale à 0.24 dB/km, et une dispersion modale de polarisation inférieure ou égale à 0.1 $\mathbf{ps/\sqrt{km}}$ .

Bien entendu, d'autres types de profils répondant aux caractéristiques précédentes peuvent être envisagés, et notamment des profils de type trapèze-anneau.

## Revendications

1. / Fibre optique monomode en câble pour réseau de transmission à fibre optique à multiplexage en longueurs d'onde avec une plage d'utilisation allant de 1300 nm à 1625 nm et présentant pour une longueur d'onde de 1550 nm :

   - un rapport entre la dispersion et la pente de dispersion compris entre 250nm et 370 nm,
   - une surface effective au moins égale à 50 $\mu$m$^2$
   - un rapport entre le carré de la surface effective et la pente de dispersion chromatique supérieur à 80000 $\mu$m$^4$.nm$^2$.km/ps, ladite fibre étant **caractérisée en ce qu'**elle présente en outre les caractéristiques suivantes, une longueur d'onde de dispersion nulle inférieure ou égale à 1370 nm,
   - une dispersion C comprise entre 7 et 11 ps/nm.km,

   et **en ce que** le profil d'indice, comprend un coeur optique entouré d'une gaine optique avec un indice de réfraction constant, ledit coeur optique présentant un profil d'indice constitué d'une partie centrale en échelon, entourée d'une zone intermédiaire d'indice de réfraction inférieur à celui de ladite partie centrale et à celui de la gaine, elle-même entourée d'une zone annulaire ayant un indice de réfraction inférieur à celui de ladite partie centrale et supérieur à celui de ladite zone intermédiaire et de la gaine.

2. / Fibre optique selon la revendication 1, **caractérisée en ce que** la longueur d'onde de coupure théorique est inférieure ou égale à 1.8 $\mu$m.

3. / Fibre optique selon l'une des revendications 1 et 2, **caractérisée en ce qu'**elle présente à 1550 nm des pertes par courbures inférieures ou égales à 10$^{-2}$ dB pour 100 tours de fibre enroulée sur une bobine de rayon 30 mm.

4. / Fibre optique selon l'une des revendications précédentes, **caractérisée en ce qu'**elle présente à 1625 nm des pertes par courbures inférieures ou égales à 0.5 dB pour 100 tours de fibre enroulée sur une bobine de rayon 30mm.

5. / Fibre optique selon l'une des revendications précédentes, **caractérisée en ce qu'**elle présente à 1550 nm des pertes par courbures inférieures ou égales à 100 dB/m lorsqu'elle est enroulée autour d'un rayon 10 mm.

**6.** / Fibre optique selon l'une des revendications précédentes, **caractérisée en ce qu'**elle présente à 1625 nm des pertes par courbures inférieures ou égales à 400 dB/m lorsqu'elle est enroulée autour d'un rayon 10 mm.

**7.** / Fibre optique selon l'une des revendications précédentes, **caractérisée en ce que** la pente de dispersion chromatique à 1550 nm est comprise entre 0.01 et 0.04 ps/nm$^2$.km.

**8.** / Fibre optique selon l'une des revendications précédentes, **caractérisée en ce que** la surface effective à 1550 nm est comprise entre 50 $\mu$m$^2$ et 70$\mu$m$^2$.

**9.** / Fibre optique selon l'une des revendications précédentes, **caractérisée en ce qu'**elle présente un profil de type échelon-anneau.

**10.** / Fibre optique selon la revendication 9, **caractérisée en ce que** la différence $\Delta n_1$ entre l'indice de l'échelon de la fibre et l'indice de la gaine est compris entre 5.9x10$^{-3}$ et 8.2x10$^{-3}$.

**11.** / Fibre optique selon l'une des revendications 9 et 10, **caractérisée en ce que** la différence $\Delta n_3$ entre l'indice de l'anneau et l'indice de la gaine est comprise entre 0.9x10$^{-1}$ et 7.6x10$^{-3}$.

**12.** / Fibre optique selon l'une des revendications 9 à 11, **caractérisée en ce que** la différence $\Delta n_2$ entre l'indice du segment intermédiaire entre l'échelon et l'anneau et l'indice de la gaine est comprise entre -6.8x10$^{-3}$ et -1.7x10$^{-3}$.

**13.** / Fibre optique selon l'une des revendications 9 à 12, **caractérisée en ce que** le rayon $r_1$ de l'échelon est compris entre 3 $\mu$m et 4.5 $\mu$m.

**14.** / Fibre optique selon l'une des revendications 9 à 13, **caractérisée en ce que** le rayon intérieur de l'anneau $r_2$ est compris entre 5.3 $\mu$m et 8.1 $\mu$m.

**15.** / Fibre optique selon l'une des revendications 9 à 14, **caractérisée en ce que** le rayon extérieur de l'anneau $r_3$ est compris entre 7.3 $\mu$m et 11.1 $\mu$m.

**16.** / Fibre optique selon l'une des revendications 1 à 15, **caractérisée en ce qu'**elle présente une atténuation à 1550 nm inférieure ou égale à 0.24 dB/km.

**17.** / Fibre optique selon l'une des revendications 1 à 16, **caractérisée en ce qu'**elle présente une dispersion modale de polarisation inférieure ou égale à 0.1 $ps/\sqrt{km}$. .

**18.** / Réseau de transmission à fibre optique à multiplexage en longueurs d'onde, comprenant comme fibre de ligne de la fibre selon l'une des revendications précédentes.

**19.** / Réseau de transmission à fibre optique selon la revendication 18, **caractérisé en ce qu'**il comprend en outre de la fibre à compensation de dispersion présentant une dispersion $C_{DCF}$ el une pente de dispersion $C'_{DCF}$ telles que le rapport (C/$C_{DCF}$: C'/$C'_{DCF}$] soit compris entre 0.8 et 1.2.

**20.** / Réseau de transmission à fibre optique selon la revendication 19, **caractérisé en ce que** ledit rapport est voisin de 1.

**Claims**

**1.** Optical fibre which is single-mode in cable for a wavelength multiplexing optical fibre transmission network having a range of use extending from 1300 nm to 1625 nm and having for a wavelength of 1550 nm:

   - a ratio between the dispersion and the dispersion slope of between 250 nm and 370 nm inclusive,
   - an effective surface area equal to at least 50 $\mu$m$^2$
   - a ratio between the square of the effective surface area and the chromatic dispersion slope which is greater than 80000 $\mu$m$^4$.nm$^2$.km/ps,

said fibre being **characterised in that** it additionally has the following characteristics, a zero-dispersion wavelength less than or equal to 1370 nm, a dispersion C of between 7 and 11 ps/nm.km inclusive, and **in that** the index profile comprises an optical core surrounded by an optical cladding which has a constant refractive index, said optical core having an index profile composed of a stepped central portion surrounded by an intermediate zone having a refractive index lower than that of said central portion and than that of the cladding and itself surrounded by a ring-shaped zone having a refractive index lower than that of said central portion and higher than that of said intermediate zone and than that of the cladding.

2. Optical fibre according to claim 1, **characterised in that** the theoretical cut-off wavelength is less than or equal to 1.8 $\mu$m.

3. Optical fibre according to one of claims 1 and 2, **characterised in that** it has, at 1550 nm, bending losses less than or equal to $10^{-2}$ dB/m for 100 turns of fibre wound around a reel of 30 mm radius.

4. Optical fibre according to one of the preceding claims, **characterised in that** it has, at 1625 nm, bending losses less than or equal to 0.5 dB/m for 100 turns of fibre wound around a reel of 30 mm radius.

5. Optical fibre according to one of the preceding claims, **characterised in that** it has, at 1550 nm, bending losses less than or equal to 100 dB/m when it is wound around a radius of 10 mm.

6. Optical fibre according to one of the preceding claims, **characterised in that** it has, at 1625 nm, bending losses less than or equal to 400 dB/m when it is wound around a radius of 10 mm.

7. Optical fibre according to one of the preceding claims, **characterised in that** the chromatic dispersion slope at 1550 nm is between 0.01 and 0.04 ps/nm$^2$.km inclusive.

8. Optical fibre according to one of the preceding claims, **characterised in that** the effective surface area at 1550 nm is between 50 $\mu$m$^2$ and 70 $\mu$m$^2$ inclusive.

9. Optical fibre according to one of the preceding claims, **characterised in that** it has a step-ring-type profile.

10. Optical fibre according to claim 9, **characterised in that** the difference $\Delta n_1$ between the index of the step of the fibre and the index of the cladding is between 5.9 x $10^{-3}$ and 8.2 x $10^{-3}$ inclusive.

11. Optical fibre according to one of claims 9 and 10, **characterised in that** the difference $\Delta n_3$ between the index of the ring and the index of the cladding is between 0.9 x $10^{-3}$ and 7.6 x $10^{-3}$ inclusive.

12. Optical fibre according to one of claims 9 to 11, **characterised in that** the difference $\Delta n_2$ between the index of the intermediate segment between the step and the ring and the index of the cladding is between -6.8 x $10^{-3}$ and -1.7 x $10^{-3}$ inclusive.

13. Optical fibre according to one of claims 9 to 12, **characterised in that** the radius $r_1$ of the step is between 3 $\mu$m and 4.5 $\mu$m inclusive.

14. Optical fibre according to one of claims 9 to 13, **characterised in that** the internal radius of the ring $r_2$ is between 5.3 $\mu$m and 8.1 $\mu$m inclusive.

15. Optical fibre according to one of claims 9 to 14, **characterised in that** the external radius of the ring $r_3$ is between 7.3 pm and 11.1 $\mu$m inclusive.

16. Optical fibre according to one of claims 1 to 15, **characterised in that** it has an attenuation at 1550 nm less than or equal to 0.24 dB/km.

17. Optical fibre according to one of claims 1 to 16, **characterised in that** it has a polarisation mode dispersion less than or equal to 0.1 ps/$\sqrt{}$km.

18. Wavelength multiplexing optical fibre transmission network comprising fibre according to one of the preceding claims as line fibre.

**19.** Optical fibre transmission network according to claim 18, **characterised in that** it additionally comprises dispersion-compensating fibre having a dispersion $C_{DCF}$ and a dispersion slope $C'_{DCF}$ such that the ratio $[C/C_{DCF} : C'/C'_{DCF}]$ is between 0.8 and 1.2 inclusive.

**20.** Optical fibre transmission network according to claim 19, **characterised in that** said ratio is close to 1.

**Patentansprüche**

**1.** Monomode-Lichtleitfaser in einem Kabel für ein Lichtleitfaser-Übertragungsnetzwerk mit Wellenlängenmultiplex, die einen Nutzungsbereich von 1300 nm bis 1625 nm und für eine Wellenlänge von 1550 nm aufweist:

- ein Verhältnis zwischen der Dispersion und der Dispersionsneigung zwischen 250 nm und 370 nm einschließlich,
- einen wirksamen Oberflächenbereich mindestens gleich 50 $\mu$m$^2$,
- ein Verhältnis zwischen dem Quadrat des wirksamen Oberflächenbereichs und der chromatischen Dispersionsneigung größer als 80000 $\mu$m$^4$.nm$^2$.km/ps,

wobei die Faser **dadurch gekennzeichnet ist, dass** sie außerdem die folgenden Merkmale aufweist, eine Nulldispersion-Wellenlänge von weniger als oder gleich 1370 nm, eine Dispersion C zwischen 7 und 11 ps/nm.km einschließlich, und dass das Indexprofil einen optischen Kern aufweist, der von einer optischen Hülle umgeben ist, die einen konstanten Brechungsindex hat, wobei der optische Kern ein Indexprofil aufweist, das aus einem gestuften zentralen Anschnitt besteht, der von einer Zwischenzone mit einem geringeren Brechungsindex als derjenige des zentralen Abschnitts und als derjenige der Hülle umgeben ist, und selbst von einer ringförmigen Zone umgeben ist, die einen geringeren Brechungsindex als derjenige des zentralen Abschnitts und höher als derjenige der Zwischenzone und als derjenige der Hülle aufweist.

**2.** Lichtleitfaser nach Anspruch 1, **dadurch gekennzeichnet, dass** die theoretische Grenzwellenlänge geringer als oder gleich 1,8 $\mu$m ist.

**3.** Lichtleitfaser nach einem der Ansprüche 1 und 2, **dadurch gekennzeichnet, dass** sie bei 1550 nm Krümmungsverluste von weniger als oder gleich $_{10}$-2 dB/m für 100 Umdrehungen einer Faser aufweist, die auf eine Spule mit einem Radius von 30 mm gewickelt ist.

**4.** Lichtleitfaser nach einem der vorhergehenden Ansprüche, **dadurch gekennzeichnet, dass** sie bei 1625 nm Krümmungsverluste von weniger als oder gleich 0,5 dB/m für 100 Umdrehungen einer Faser aufweist, die auf eine Spule mit einem Radius von 30 mm gewickelt ist.

**5.** Lichtleitfaser nach einem der vorhergehenden Ansprüche, **dadurch gekennzeichnet, dass** sie bei 1550 nm Krümmungsverluste von weniger als oder gleich 100 dB/m aufweist, wenn sie um einen Radius von 10 mm gewickelt ist.

**6.** Lichtleitfaser nach einem der vorhergehenden Ansprüche, **dadurch gekennzeichnet, dass** sie bei 1625 nm Krümmungsverluste von weniger als oder gleich 400 dB/m aufweist, wenn sie um einen Radius von 10 mm gewickelt ist.

**7.** Lichtleitfaser nach einem der vorhergehenden Ansprüche, **dadurch gekennzeichnet, dass** die chromatische Dispersionsneigung bei 1550 nm zwischen 0,01 und 0,04 ps/nm$^2$.km einschließlich liegt.

**8.** Lichtleitfaser nach einem der vorhergehenden Ansprüche, **dadurch gekennzeichnet, dass** der wirksame Oberflächenbereich bei 1550 nm zwischen 50 $\mu$m$^2$ und 70 $\mu$m$^2$ einschließlich liegt.

**9.** Lichtleitfaser nach einem der vorhergehenden Ansprüche, **dadurch gekennzeichnet, dass** sie ein Profil vom Typ Stufe-Ring aufweist.

**10.** Lichtleitfaser nach Anspruch 9, **dadurch gekennzeichnet, dass** die Differenz $\Delta n_1$ zwischen dem Index der Stufe der Faser und dem Index der Hülle zwischen 5,9x10$^{-3}$ und 8,2x10$^{-3}$ einschließlich liegt.

**11.** Lichtleitfaser nach einem der Ansprüche 9 und 10, **dadurch gekennzeichnet, dass** die Differenz $\Delta n_3$ zwischen dem Index des Rings und dem Index der Hülle zwischen 0,9x10$^{-3}$ und 7,6x1 0$^{-3}$ einschließlich liegt.

**12.** Lichtleitfaser nach einem der Ansprüche 9 bis 11, **dadurch gekennzeichnet, dass** die Differenz $\Delta n_2$ zwischen dem Index des Zwischensegments zwischen der Stufe und dem Ring und dem Index der Hülle zwischen $-6,8 \times 10^{-3}$ und $-1,7 \times 10^{-3}$ einschließlich liegt.

**13.** Lichtleitfaser nach einem der Ansprüche 9 bis 12, **dadurch gekennzeichnet, dass** der Radius $r_1$ der Stufe zwischen 3 $\mu$m und 4,5 $\mu$m einschließlich liegt.

**14.** Lichtleitfaser nach einem der Ansprüche 9 bis 13, **dadurch gekennzeichnet, dass** der Innenradius des Rings $r_2$ zwischen 5,3 $\mu$m und 8,1 $\mu$m einschließlich liegt.

**15.** Lichtleitfaser nach einem der Ansprüche 9 bis 14, **dadurch gekennzeichnet, dass** der Außenradius des Rings $r_3$ zwischen 7,3 $\mu$m und 11,1 $\mu$m liegt.

**16.** Lichtleitfaser nach einem der Ansprüche 1 bis 15, **dadurch gekennzeichnet, dass** sie eine Dämpfung bei 1550 nm von weniger als oder gleich 0,24 dB/km aufweist.

**17.** Lichtleitfaser nach einem der Ansprüche 1 bis 16, **dadurch gekennzeichnet, dass** sie eine modale Polarisationsdispersion von weniger als oder gleich 0,1 $ps/\sqrt{km}$ aufweist.

**18.** Lichtleitfaser-Übertragungsnetzwerk mit Wellenlängenmultiplex, das eine Faser nach einem der vorhergehenden Ansprüche als Leitungsfaser aufweist.

**19.** Lichtleitfaser-Übertragungsnetzwerk nach Anspruch 18, **dadurch gekennzeichnet, dass** es außerdem Fasern mit Dispersionskompensation mit einer derartigen Dispersion $C_{DCF}$ und einer derartigen Dispersionsneigung $C'_{DCF}$ aufweist, dass das Verhältnis $[C/C_{DCF} : C'/C'_{DCF}]$ zwischen 0,8 und 1,2 einschließlich liegt.

**20.** Lichtleitfaser-Übertragungsnetzwerk nach Anspruch 19, **dadurch gekennzeichnet, dass** das Verhältnis nahe 1 ist.